# EUROPÄISCHE PATENTSCHRIFT

(11) **EP 1 950 010 B1**
(45) Veröffentlichungstag und Bekanntmachung des Hinweises auf die Patenterteilung: **10.04.2013**
(21) Anmeldenummer: 07150146.4
(22) Anmeldetag: 19.12.2007
(51) Int. Cl.: G05B 19/423, B25J 9/22, B25J 9/16

(54) **Roboter und Verfahren zum Programmieren eines Roboters**
Robot and method for programming a robot
Robot et procédé de programmation d'un robot

(30) Priorität: 28.12.2006 DE 102006061752
(43) Veröffentlichungstag der Anmeldung: 30.07.2008
(73) Patentinhaber: KUKA Laboratories GmbH, 86165 Augsburg (DE)
(72) Erfinder: Weiss, Martin, 86459 Margertshausen (DE); Bischoff, Rainer, 86163 Augsburg (DE)
(74) Vertreter: Patentanwälte Funk & Böss GbR

(56) Entgegenhaltungen:
- EP-A- 0 573 657
- EP-A- 1 422 020
- EP-A- 1 588 806
- WO-A-94/20262
- JP-A- 5 303 422
- JP-A- 6 278 007
- US-A- 5 880 956
- US-B1- 6 385 508
- Y.CHEN, F. NAGHDY: "Human-to-Robot Skill Transfer Through Haptic Rendered Environment" PROCEEDINGS 2002 AUSTRALASIAN CONFERENCE ON ROBOTICS AND AUTOMATION, 29. November 2002 (2002-11-29), XP002521301 Auckland
- ARVIND BALIJEPALLI ET AL: "An Exploratory Haptic Based Robotic Path Planning and Training Tool" PROCEEDINGS OF THE 2002 IEEE, WASHINGTON,DC, 1. Mai 2002 (2002-05-01), Seiten 438-443, XP002515133

## Beschreibung

Die Erfindung betrifft ein Verfahren zum Programmieren eines Roboters und einen Roboter.

Roboter sind Handhabungsmaschinen, die zur selbsttätigen Handhabung von Objekten mit zweckdienlichen Werkzeugen ausgerüstet und in mehreren Bewegungsachsen insbesondere hinsichtlich Orientierung, Position und Arbeitsablauf programmierbar sind.

Unter Verfahren zum Programmieren des Roboters (Programmierverfahren), versteht man das planmäßige Vorgehen zur Erzeugung von Anwenderprogrammen.

Ein allgemein bekanntes Programmierverfahren ist die sogenannte Teach-In-Programmierung, bei der eine Bewegungsinformation für den Roboter durch Anfahren gewünschter Raumpunkte mit Hilfe einer geeigneten Vorrichtung, beispielsweise eines Programmierhandgerätes oder eines Bedienfeldes, und Übernahme dieser Raumpunkte in die Robotersteuerung erstellt wird.

Eine weitere Art der Programmierung ist das sogenannte Play-Back Verfahren, bei dem die Programmierung eines Arbeitsvorgangs durch manuelles Führen des Roboters entlang einer gewünschten Raumkurve erfolgt. Dabei werden die Lage-Ist Werte, d. h. die Achsstellungen oder die TCP-Position (Tool Center Point Position) des Roboters in einem definierten Zeit- oder Wegraster in das Anwenderprogramm übernommen.

Die EP 1 508 396 A1 offenbart ein Verfahren zum Steuern der Andruckskraft einer mittels eines Roboters geführten Schweißzange. Die auf die Schweißzange wirkende Kraft wird während des Schweißens gemessen und der Roboter derart verstellt, dass die auf die Schweißzange wirkende Kraft gleich einer vorgegebenen Soll-Kraft ist.

A. Balijepalli et al offenbaren in "An Exploratory Haptic Based Robotic Path Planning And Training Tool", Proceedings of the 2002 IEEE International Conference on Robotic & Automation, Washington DC, Mai 2002, Seiten 438-443 eine haptische Simulationsvorrichtung, mittels derer u.A. eine Person trainiert werden kann, die eine Bahnplanung für einen Roboter durchführen soll.

Die Aufgabe der Erfindung ist es, ein Verfahren zum Programmieren eines Roboters anzugeben, welches es einer Bedienperson des Roboters erlaubt, in relativ einfacher Weise den Roboter derart zu programmieren, dass dieser beim Ausführen des entsprechenden Anwenderprogramms ein vorbestimmtes Kraft- und/oder Momentenverhalten aufweist.

Eine weitere Aufgabe der Erfindung ist es, einen entsprechenden Roboter anzugeben.

Die Aufgabe der Erfindung wird gelöst durch ein Verfahren zum Programmieren eines Roboters, aufweisend folgende Verfahrensschritte:
- manuelles Anfahren von wenigstens einem Raumpunkt mit einem Roboter durch manuelles Führen,
- Ermitteln der Kräfte oder Drehmomente, die der Roboter im angefahrenen Raumpunkt ausübt, ohne Kontakt zu einem Gegenstand bei gleichzeitiger Positions- und/oder Posenregelung des Roboters, und
- Speichern der ausgeübten Kräfte oder Drehmomente.

Erfindungsgemäß wird demnach für die Programmierung des Roboters, insbesondere für die Programmierung eines Bahnverlaufs eines Flansches des Roboters, der Roboter manuell derart geführt, dass der Roboter wenigstens einen Raumpunkt, also genau einen Raumpunkt oder eine Mehrzahl von Raumpunkten, anfährt.

Für das manuelle Führen des Roboters, z.B. durch Drücken oder Ziehen an Roboterachsen bzw. an einem am Flansch des Roboters angebrachten Kraft- oder Momentensensors, kann der Roboter gravitationskompensiert arbeitet. Dann reichen für die manuelle Führung des Roboters relativ kleine Kräfte aus, was wiederum eine relativ einfache Führung des Roboters bewirkt.

Aufgrund des manuellen Anfahrens von insbesondere mehreren Raumpunkten ergibt sich eine relativ einfache Art, einen gewünschten Bewegungsablauf des Roboters zu programmieren.

Hat der Roboter bzw. der Flansch oder ein am Flansch befestigtes Werkzeug einen der Raumpunkte erreicht, dann wird erfindungsgemäß die vom Roboter aufgebrachte Kraft oder das vom Roboter aufgebrachte Drehmoment gespeichert. Dabei kann es vorgesehen sein, die ausgeübte Kraft bzw. das ausgeübte Drehmoment durch das manuelle Führen auf gewünschte Sollwerte einzustellen.

Die Kraft am TCP bzw. die Momente in den Achsen können nur dann ermittelt werden, wenn die Antriebe den Roboterarm so verspannen, dass die gewünschten Kräfte bzw. Momente auftreten. Diese Kräfte bzw. Momente können dem Bediener beispielsweise über eine Anzeige sichtbar gemacht, aber nicht vom ihm erfühlt oder durch Führen vorgegeben werden.

Wird der Roboter manuell geführt, dann wird die Kraft bzw. das Drehmoment mit einem am Flansch befestigten Kraft- oder Drehmomentsensor ermittelt.

Um jedoch die Aufgabenstellung zu lösen, eine Kraft am TCP bzw. Momente in den Achsen durch einen Bediener durch manuelles Führen vorgeben zu können, ist es für diese Ausführungsform vorgesehen, dass der Roboter keine geschlossene kinematische Kette mit der Umgebung bildet, sondern diese offen gehalten wird, d.h. kein Gegenstand berührt wird. Dazu wird der Roboter vom Bediener ungefähr in die Pose gebracht, die für die gewünschte Aufgabe, z.B. Polieren, erforderlich ist. Dazu kann der Roboter beispielsweise einen halben Zentimeter oberhalb des Punktes / der Bahn / der Fläche positioniert werden, an dem / an der ein Prozess auszuführen ist. Vorausgesetzt, die Struktur des Roboters ist relativ, theoretisch unendlich steif, dann kann der Bediener jetzt eine Verspannung des Robotersystems dadurch herbeiführen, dass er versucht, den Roboter durch Drücken und/oder Ziehen an Strukturteilen bzw. am Flansch des Roboters zu bewegen, während der Roboter über seine interne Achs- und/oder Positionsregelung dafür sorgt, die gegenwärtige Pose oder Position beizubehalten. Auch eine Positionsregelung auf Basis externer Sensorwerte ist denkbar. Die Posen-/Positionsregelung lässt den Bediener eine virtuelle Gegenkraft spüren, vergleichbar mit der Kraft, die er spüren würde, wenn er auf das Werkzeug auf das zu bearbeitende Bauteil drücken würde (d.h. der Roboter steht dabei quasi still). So ist es ihm möglich, die Kraft bzw. die Momente zu teachen, die für den Prozess erforderlich sind. Ist der Roboter positionsgeregelt, ist es auch möglich, dass dieser auf einer vorab definierten Trajektorie verfährt. Externe Kräfte können dann von einer Bedienperson in jedem Punkt erfasst werden.

Eine Variante des oben beschriebenen Verfahrens eignet sich für die Aufzeichnung des Kraft-/Momentenverlaufs während des manuellen Führens des Roboters (d.h. der Roboter steht dabei nicht still). Dabei vollführt der Roboter kleine, insbesondere vom Bediener kaum merkbare Testbewegungen, um herauszufinden, in welchen Freiheitsgraden sich der Roboter noch bewegen kann. So kann die Steifigkeit/Nachgiebigkeit während des Vormachens eines Bearbeitungsprozesses erfasst werden.

Somit ergibt sich ein Kräfte- oder Drehmomentprofil, das den einzelnen Raumpunkten zugeordnete ist.

Für das Ermitteln der Kräfte bzw. Drehmomente kann der Roboter mit wenigstens einem Kraft- oder Drehmoment-Sensor versehen sein, der die Kräfte bzw. Drehmomente misst. Der Kraft- oder Drehmomentsensor kann insbesondere am Flansch des Roboters befestigt sein. Dann können die vom Sensor abgegebenen Signale die aufgebrachten Kräfte oder Drehmomente in kartesische Koordinatenwerten angeben. Diese Werte können gegebenenfalls auch in achsweise Werte umgerechnet werden.

Nach einer Variante des erfindungsgemäßen Verfahrens weist der Roboter eine Mehrzahl von Achsen auf, so dass für wenigstens einen Raumpunkt die aufgebrachten Kräfte oder Drehmomente der Achsen gespeichert werden. Die aufgebrachten Kräfte oder Drehmemoente in den Achsen können beispielsweise mit in den Achsen des Roboters befestigten Kraft- oder Drehmomentsensoren ermittelt werden. Von diesen Sensoren erzeugte Messwerte können dann gegebenenfalls in kartesische Werte am Flansch oder am sogenannten Tool Point Center des Roboters umgerechnet werden.

Umfasst der Roboter elektrische Motoren für die Bewegung des Roboters, dann können die vom Roboter ausgeübten Kräfte bzw. Drehmomente auch über die elektrischen Ströme der elektrischen Motoren ermittelt werden. Die elektrischen Ströme ergeben insbesondere die von den Achsen aufgebrachten Kräfte bzw. Drehmomente. Außerdem sind die elektrischen Ströme je nach verwendetem Motorentyp proportional zu den aufgebrachten Kräften bzw. Drehmomenten.

Die Sollwerte für Kräfte und Drehmomente können auch manuell eingetragen werden.

Nach einer Ausführungsform des erfindungsgemäßen Verfahrens ist die gespeicherte Kraft oder das gespeicherte Drehmoment eine vom Roboter auszuübende obere Grenzkraft oder ein vom Roboter auszuübendes oberes Grenzmoment.

Gemäß einer weiteren Ausführungsform des erfindungsgemäßen Verfahrens wird für wenigstens einen Raumpunkt zusätzlich wenigstens die Stellung einer Achse gespeichert. Insbesondere können die Stellungen aller Achsen gespeichert werden. Somit sind für wenigstens einen Raumpunkt nicht nur die aufzubringenden Kräfte oder Drehmomente, sondern auch eine für die Ansteuerung der Raumpunkte mögliche Achsenstellung des Roboters abgespeichert.

Nach einer weiteren Variante des erfindungsgemäßen Verfahrens ist der Roboter bezüglich einer Mehrzahl von Freiheitsgraden beweglich, und es werden für den wenigstens einen Raumpunkt für einen ersten Teil der Freiheitsgrade des Roboters die ausgeübte Kraft oder das ausgeübte Drehmoment und für einen vom ersten Teil der Freiheitsgrade verschiedenen zweiten Teil der Freiheitsgrade die Ortskoordinaten des Raumpunktes gespeichert, analog für die Achspositionen und Achs-Kräfte und -Drehmomente.

Auf der Steuervorrichtung läuft ein die Achsen des Roboters steuerndes Rechnerprogramm. Die Ortskoordinaten bzw. die zum Zeitpunkt der Speicherung augenblickliche Stellung der Antriebsachsen werden z.B. im Programmquelltext oder in einer dem Rechnerprogramm zugeordneten Datenliste gespeichert. Diese Stellung der Antriebsachsen kann in eine kartesische Position und Orientierung des im Raum angefahrenen Raumpunktes, ausgedrückt in der Lage des sogenannten Tool Center Point des Roboters bezogen auf ein Basiskoordinatensystem, umgerechnet werden. Diese kartesische Position (einschl. Zusatzinformationen zur Auflösung von in der Regel mehreren möglichen Achskonfigurationen, die alle dieselbe kartesische Position ergeben) kann anstelle oder in Kombination mit den Achswinkeln abgelegt werden. Dieser Tool Center Point kann sich beispielsweise am Flansch oder einem anderen ausgewiesenen Punkt des Roboters, seines Werkzeuges (z.B. Schweißspitze einer am Roboterflansch montierten Schweißzange) oder Raumes (Schweißspitze einer im Raum befestigten Schweißzange) befinden. Verschiedene Robotersteuerungen können sich beim Teachen beispielsweise neben den Achsstellungen auch das verwendete Koordinatensystem, das augenblicklich verwendete Werkzeug, die Position und die Orientierung (Pose) des Tool Center Points merken.

Programmiert die Person mit dem Handbedienungsgerät eine Folge von Raumpunkten, können diese je nach Robotersteuerung auf unterschiedlichen Bahnen erreicht werden. Bei PTP-Bahnen (Punkt-zu-Punkt Bahnen) bewegen sich alle Achsen des Roboters dergestalt, dass die gewünschte Pose auf einer Geraden im Achsraum erreicht wird. Bei allen übrigen Bahnen folgt der Tool Center Point in erster Linie einem gewünschten kartesischen Verlauf, also z.B. auf einer Geraden, Kreis- oder Splinebahn im Raum. Auf dieser kartesischen Bahn kann auch ein Geschwindigkeitsverlauf, z.B. zeitoptimal oder durch Angabe maximaler Geschwindigkeiten und Beschleunigungen, programmiert werden.

Auch können je nach verwendetem Werkzeug unterschiedliche Parameter für dieses Werkzeug punkt- bzw. bahnbezogen beispielsweise zur Bearbeitung von Werkstücken gespeichert werden.

Nach einer weiteren Ausführungsform des erfindungsgemäßen Verfahrens werden zusätzlich folgende Verfahrensschritte durchgeführt:
- Festlegen einer Bahn, auf der sich der Roboter nach seiner Programmierung bewegen soll, und
- Errechnen der vom Roboter auszuübenden Kraft oder des vom Roboter auszuübenden Drehmoments während der Bewegung entlang der Bahn aufgrund der für die Raumpunkte ermittelten Kräfte oder Drehmomente.

Die Aufgabe der Erfindung wird auch gelöst durch einen Roboter, aufweisend
- eine Mehrzahl von Antrieben,
- eine Mehrzahl von von den Antrieben bewegbaren Achsen,
- eine Vorrichtung zum Ermitteln einer vom Roboter ausgeübten Kraft oder eines vom Roboter ausgeübten Drehmoments und
- eine zum Steuern der Antriebe vorgesehene Steuervorrichtung, die aufgrund eines manuellen Anfahrens von wenigstens einem Raumpunkt mit dem Roboter mittels der Vorrichtung zum Ermitteln der vom Roboter ausgeübten Kraft oder des vom Roboter ausgeübten Drehmoments beim Erreichen des Raumpunktes ermittelte Kräfte oder Drehmomente speichert.

Der erfindungsgemäße Roboter kann beispielsweise für das Anfahren von wenigstens einem Raumpunkt manuell geführt werden oder kann ein mit der Steuervorrichtung verbundenes manuelles Eingabegerät aufweisen, mittels dessen der Roboter manuell bewegbar ist.

Die Vorrichtung zum Ermitteln der vom Roboter ausgeübten Kraft oder des vom Roboter ausgeübten Drehmoments ist beispielsweise wenigstens ein Kraft- oder Drehmoment-Sensor, der z.B. am Flansch oder in den Achsen des Roboters befestigt ist.

Weisen nach einer Ausführungsform die Antriebe des erfindungsgemäßen Roboters elektrische Motoren auf, kann die Vorrichtung zum Ermitteln der vom Roboter ausgeübten Kraft oder des vom Roboter ausgeübten Drehmoments derart eingerichtet sein, dass sie die Kraft oder das Drehmoment mittels gemessener elektrischer Ströme der elektrischen Motoren ermittelt.

Die gespeicherte Kraft oder das gespeicherte Drehmoment kann eine vom Roboter auszuübende obere Grenzkraft oder ein vom Roboter auszuübendes oberes Grenzmoment sein.

Nach einer Variante des erfindungsgemäßen Roboters ist dessen Steuervorrichtung derart eingerichtet, dass sie für wenigstens einen Raumpunkt zusätzlich die dazu gehörige Stellung wenigstens einer Achse speichert. Die Steuervorrichtung kann insbesondere derart eingerichtet sein, dass sie die Stellungen aller Achsen speichert.

Der erfindungsgemäße Roboter ist bezüglich einer Mehrzahl von Freiheitsgraden, insbesondere bezüglich von sechs Freiheitsgraden bewegbar und die Steuervorrichtung kann nach einer Ausführungsform derart eingerichtet sein, dass sie für den wenigstens einen Raumpunkt für einen ersten Teil der Freiheitsgrade des Roboter die ausgeübte Kraft oder das ausgeübte Drehmoment und für einen vom ersten Teil der Freiheitsgrade verschiedenen zweiten Teil der Freiheitsgrade die Ortskoordinaten des Raumpunktes speichert. Es ist auch möglich, dass für den wenigstens einen Raumpunkt für einige Freiheitsgrade die Position und die ausgeübte Kraft oder das ausgeübte Drehmoment gespeichert wird.

Nach einer weiteren Variante des erfindungsgemäßen Roboters ist dessen Steuervorrichtung derart eingerichtet, dass sie aufgrund einer festgelegten Bahn, auf der sich der Roboter nach dem Anfahren von mehreren Raumpunkten bewegen soll, d.h. im Programmbetrieb, vom Roboter auszuübende Kräfte oder Drehmomente während der Bewegung entlang der Bahn aufgrund der für die Raumpunkte ermittelten Kräfte oder Drehmomente errechnet.

Mit dem erfindungsgemäßen Verfahren bzw. dem erfindungsgemäßen Roboter ist es demnach möglich, neben oder anstelle von insbesondere posenbezogenen Bahnverläufen, d.h. einem Bahnverlauf des Tool Center Point des Roboters bezüglich dessen Position und Orientierung im Raum, auch Kraft- und Drehmoment bezogene Bahnverläufe in einem Roboterprogramm angeben zu können. Dabei können die vom erfindungsgemäßen Roboter im Programmbetrieb einzustellenden Kräfte und Momente gegebenenfalls in sechs kartesischen bzw. allen achsspezifischen Freiheitsgraden durch eine Person manuell in direkter Interaktion mit dem erfindungsgemäßen Roboter vorgegeben werden. Die einzustellenden Kräfte und Momente können auch durch Offline-Programmierung eingestellt werden.

Analog zur konventionellen reinen Posenvorgabe, d.h. einer Vorgabe der Orientierung und Position im Raum des Tool Center Point mit keiner weiteren Information, werden erfindungsgemäß für bestimmte Raumpunkte Kräfte oder Momente durch das Anfahren des Roboters vorgeben.

Die Kräfte bzw. Drehmomente werden in der Steuerungsvorrichtung des erfindungsgemäßen Roboters gespeichert. Die Steuerungsvorrichtung kann derart ausgeführt sein, dass sie für das Überführen des Roboters von einem Punkt-/Kraft-Momentenprofil zum nächsten sorgt.

Zusätzlich zum Kraft- oder Drehmomentprofil ist es weiterhin möglich, einen zeitlichen Verlauf von Posen in Kombination mit Kräften oder Momenten zu ermöglichen. Hierbei werden nicht nur die Pose und Kräfte bzw. Momente am Tool Center Point an den Achsen für die Raumpunkte einer Bewegung gespeichert, sondern insbesondere auch für jeden Interpolationstakt. Die Steuerungsvorrichtung sorgt dann für die Wiedergabe einer so aufgezeichneten oder berechneten Bewegung.

Werden die Kräfte bzw. Drehmomente achsenspezifisch gespeichert, kann ein in der Steuerungsvorrichtung bereits hinterlegtes Koordinatensystem, wie es bei einer lediglichen Speicherung der Koordinaten der Raumpunkte üblich ist, verwendet werden. Eine der Achse des Koordinatensystems kann insbesondere mit der Drehachse zusammen fallen. Das Koordinatensystem liefert dann zusätzlich den Drehsinn.

Bei translatorischen Achsen kann die ausgeübte Kraft in Achsrichtung z.B. mit der Konvention gespeichert werden, dass eine positive Kraft die Achse in positive Richtung bewegt. Bei rotatorischen Achsen kann das Drehmoment um die Achse z.B. mit der Konvention gespeichert werden, dass ein positives Drehmoment eine Drehung der Achse im mathematisch positiven Sinn bewirkt. Umfasst der Roboter mehrere Achsen, können die Drehmomente der einzelnen Achsen mit τ1, ..., τn bezeichnet werden.

In Gelenken des Roboters wirkende Kräfte orthogonal zur Bewegungsrichtung (bei translatorischen Achsen) bzw. Kippmomente (bei rotatorischen Achsen) brauchen nicht notwendigerweise gespeichert oder können auf Null gesetzt werden, weil die Übertragung von Kräften bzw. Momenten in diesen Richtungen in der Regel nicht durch die Achssteuerung beeinflusst werden kann.

Bei einer Speicherung der Drehmomente oder Kräfte in kartesischen Koordinaten kann ebenfalls ein Koordinatensystem definiert und die Kräfte bzw. Drehmomente mit der Konvention abgelegt werden, dass eine positive Kraft in Richtung der Achsen kartesischen Koordinatensystems bzw. ein positives Drehmoment um eine Achse des kartesischen Koordinatensystems eine Bewegung in positive Richtung bzw. eine Drehung in positiver Richtung um diese Achse bewirkt. Mögliche Bezeichnungen sind: fx, fy, fz, nx, ny, nz. Insbesondere können Drehmomente wie in der Physik üblich den Achsen zugeordnet sein. Dies vermeidet Singularitätsprobleme bei den in der Robotik gebräuchlichen Orientierungsbeschreibungen.

Es müssen nicht notwendigerweise alle Kraft- oder Drehmomentkomponenten für die einzelnen Raumpunkte ermittelt oder gespeichert werden. Es ist z.B. auch möglich, nur Kraft- oder Drehmomentkomponenten in wenigstens einer vorbestimmten Richtung zu speichern. Beim Anfahren eines solchen Raumpunktes kann dann für die Richtungen, für die keine Kraft bzw. kein Drehmoment gespeichert wird, die Position mit Standard-Lageregelung angefahren werden. Dies ist z.B. vorteilhaft für Anwendungen, bei denen z.B. kraftabhängige Bahnabweichungen in einigen Richtungen erforderlich sind, Abweichungen in den orthogonalen Richtungen aber einen Fehlerzustand darstellen.

Die Struktur zum Speichern der Kräfte oder Drehmomente kann um Elemente ergänzt werden, die angeben, wann die gewünschten Kräfte oder Drehmomente als erreicht gelten. Je nach Anwendung kann dies bedeuten, dass die Kraft bzw. das Moment erstmals (betraglich) überschritten wird, oder dass die Kraft bzw. das Moment mit einer einstellbaren Toleranz für eine gewisse Zeit vorliegt.

Weiterhin können Fehlerkorridore bzw.- bereiche bezogen auf die abgespeicherte Position und/oder den gespeicherten Kräften bzw. Drehmomenten angegeben werden. Dies kann beispielsweise dann erforderlich sein, wenn der Roboter nicht unbedingt einen Ruhezustand erreichen kann und beispielsweise versucht, an einem Punkt im Raum eine bestimmte Kraft aufzubringen. Solange am Roboter kein Gleichgewicht bezogen auf die Summe aller Kräfte und Momente herrscht, wird sich der Roboter bewegen. Die anzugebenden maximalen Fehlerwerte können als Schranke verwendet werden, um den Roboter daran zu hindern, einen vorgegeben Bereich zu verlassen. Dieser Bereich kann beispielsweise bezogen sein auf Position und/oder Orientierung des Tool Center Point im Raum, auf Kräfte oder Momente in der Roboterstruktur oder auf Richtung und Größe von extern auf den Tool Center Point wirkenden Kräften oder Momente.

Eine Möglichkeit, einen Fehlerkorridor oder -bereich vorzugeben, ist beispielsweise für die Kräfte oder Drehmomente eines bestimmten Raumpunktes nicht die genauen Ortskoordinaten dieses Raumpunktes abzuspeichern, sondern einen geometrischen (dreidimensionalen) Bereich z.B. in Form einer Kugel im dreidimensionalen Raum um den relevanten Raumpunkt zu definieren. Dies erfolgt z.B. analog im Orientierungsraum, im Raum der Kräfte in xyz-Richtung oder Momente um xyz-Achsen, mit einem vom Benutzer zu definierenden Fehlerradius. Gerät der Roboter beim Versuch, diesen Raumpunkt mit der gewünschten Kraft anzufahren, außerhalb des vorgegebenen Fehlerbereichs, dann kann der Roboter automatisch angehalten werden.

Weitere Möglichkeiten, Fehlerbereiche vorzugeben, ergeben sich aus der Beschreibung von werkzeugbezogenen Koordinatensystemen, um die herum oder in deren Relation Fehlerbereiche in Form von geometrischen Objekten, z.B. Linien, Flächen, wie Ebenen, Rechtecke, Trapeze, oder Volumina, wie Kugeln, Zylinder oder Quader, definiert werden.

Analog zum Vorgeben eines Fehlerbereiches, bei dessen Überschreitung der Roboter z.B. in einen Fehlerzustand wechselt, kann ein Aktionsbereich definiert werden, innerhalb dessen der Roboter seine augenblickliche Operation durchführt. Innerhalb dieses Aktionsbereiches können verschiedene Zustände bezogen auf Positionen, Orientierungen, Kräfte oder Momente definiert werden, deren Erreichen dafür sorgt, dass die augenblickliche Operation beendet und zur nächsten Programmzeile und damit zur nächsten Aktion gewechselt wird.

So ist es möglich, relativ komplexe Vorgänge zu teachen, bei denen der Roboter zwischen verschiedenen Aktionsbereichen und Zuständen wechselt.

Das erfindungsgemäße Verfahren kann besonders vorteilhaft genutzt werden, um haptische Eindrücke zu realisieren.

Um eventuell die gewünschte Bahn zu erhalten, auf der sich der Roboter im Programmbetrieb bewegen soll, können die den Raumpunkten zugeordneten Kräfte bzw. Drehmomente überschliffen werden. Dieses Überschleifen kann ähnlich einem Überschleifen von ermittelten Raumpunkten zu einer Bahnkurve erfolgen. So ist es möglich, die einzelnen Raumpunkte z.B. entsprechend einer Linear-, Zirkular-, Spline- oder Punkt-zu-Punkt-Bewegung zu verbinden und durch "Überschleifen" z.B. mit Polynomkurven zu einer glatten Kontur zu verbinden.

Ausführungsbeispiele der Erfindung sind exemplarisch in den beigefügten schematischen Zeichnungen dargestellt. Es zeigen:
- Figs. 1A-1F: mehrere Stadien eines Roboters während einer Programmierung,
- Fig. 2: ein Diagramm zur Veranschaulichung einer Berechnung eines Bewegungsablaufs aufgrund einer Programmierung,
- Fig.3: ein das erfindungsgemäße Verfahren erläuterndes Flussdiagramm und
- Figs. 4A-4C, 5: Szenarien zur Veranschaulichung eines nachgiebigen Regelungsverfahren.

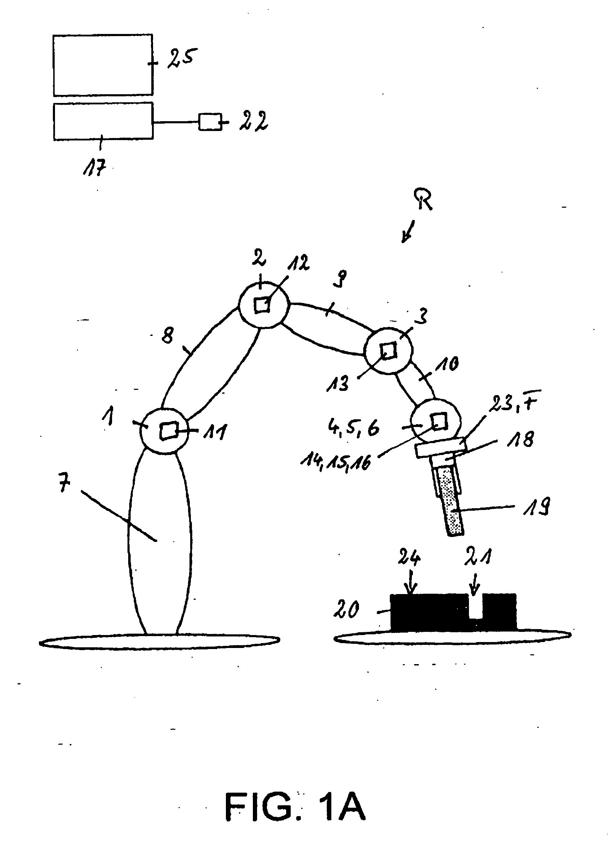

Die Figuren 1A-1F zeigen mehrere Stadien eines 6-Achs-Knickarm Industrieroboters R während einer Programmierung, während derer eine bestimmte Kraft und/oder Drehmoment-Charakteristik für den Industrieroboter R festgelegt wird, die dieser bei einer Anwendung aufweisen soll.

Der in den Figuren 1A-1F dargestellte Roboter R weist mehreren Achsen 1-6, mehrere Hebeln 7-10 und einen Flansch F auf, an dem ein Greifer 18 befestigt ist. Jede der Achsen 1-6 wird im Falle des vorliegenden Ausführungsbeispiels mit einem elektrischen Motor 11-16 bewegt, wobei die Motoren 11-16 in nicht dargestellter Weise mit einem Steuerrechner 17 elektrisch verbunden sind, sodass der Steuerrechner 17 bzw. ein auf dem Steuerrechner 17 laufendes Rechnerprogramm die Motoren 11-16 derart ansteuern kann, sodass die Position und Orientierung des Flansches F und somit des am Roboter R befestigten Greifers 18 im Wesentlichen frei im Raum ausgerichtet werden kann.

Im Falle des vorliegenden Ausführungsbeispiels ist der Roboter R dafür vorgesehen, einen Kolben 19 in einen Spalt 21 eines Metallblocks 20 zu fügen. Die Position des Metallblocks ist nicht in jedem Prozesszyklus identisch, so dass kein rein positionsbasiertes Teach-In erfolgen kann. Der Metallblock 20 kann beispielsweise während späterer Fertigungsschritte für die Fertigung eines Zylinders verwendet werden. Damit der im Betrieb befindliche Roboter R den Kolben 19 fügen kann, muss der Roboter R ein den Roboter R geeignetes steuerndes Steuerprogramm aufweisen, das auf dem Steuerrechner 17 läuft.

Dieses Steuerprogramm wird im Falle des vorliegenden Ausführungsbeispiels mittels Teach-In Programmierung erstellt.

Während der Teach-In Programmierung bewegt eine in den Figuren nicht näher dargestellte Person zunächst den Roboter R mittels eines mit dem Steuerrechner 17 verbundenen Eingabegeräts, z.B. einer 6D-Maus, eines Joysticks oder eines in den Figuren 1A-1F dargestellten Handhabungsgerätes 22 derart, dass die Position und Orientierung des Greifers 18 mit gegriffenem Kolben 19 frei im Raum angefahren werden können. Dies wird erreicht, indem der Steuerrechner 17 bzw. ein auf dem Steuerrechner 17 laufendes Rechnerprogramm aufgrund von Eingaben in das Handhabungsgerät 22 die elektrischen Motoren 11-16 derart ansteuert, so dass die Achsen 1-6 sich entsprechend der gewünschten Position und Orientierung des Greifers 18 bewegen.

Im Falle des vorliegenden Ausführungsbeispiels umfasst der Roboter R einen am Flansch F befestigten Kraftsensor 23, der auf den Flansch F bzw. Greifer 18 wirkende Kräfte misst. Der Kraftsensor 23 ist in nicht dargestellter Weise mit dem Steuerrechner 17 verbunden und überträgt den gemessenen Kräften zugeordnete Signale an den Steuerrechner 17. Im Falle des vorliegenden Ausführungsbeispiels misst der Kraftsensor 23 Kräfte in und quer zur Längsachse des Kolbens 19.

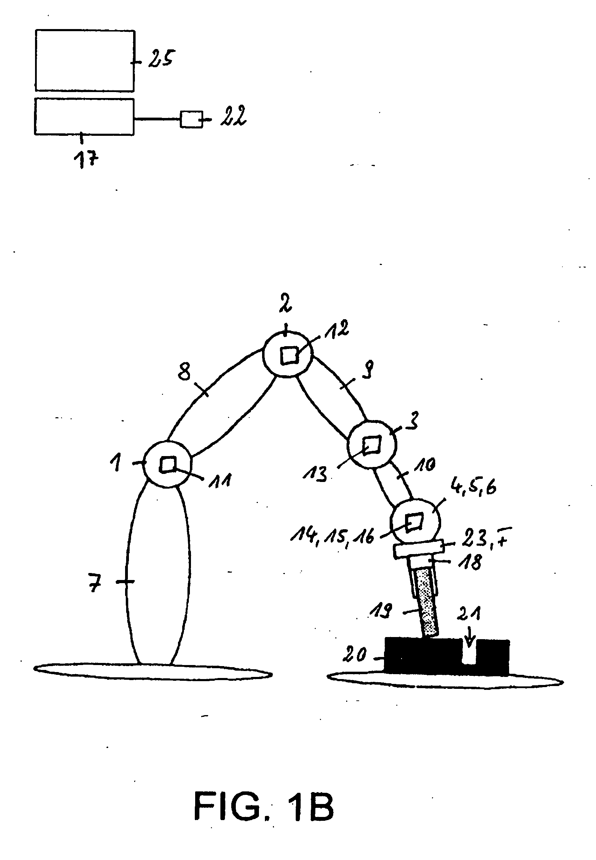

Im Falle des vorliegenden Ausführungsbeispiels, das nur zur illustration angegeben und kein Bestandteil der Erfindung ist, bewegt die das Handhabungsgerät 22 bedienende Person während der Teach-In Programmierung den Greifer 18 in Richtung des Metallblocks 20, bis der Kolben 19 eine Oberfläche 24 des Metallblocks 20 berührt, wie dies in der Fig. 1B gezeigt ist. Beim Auftreffen des Kolbens 19 auf den Metallblock 20 wirkt auf den Koben 19 und auf den Greifer 18 eine Kraft in Bewegungsrichtung des Roboters R. Diese Kraft bzw. der Kraftanstieg beim Auftreffen auf den Metallblock 20 wird mit dem Kraftsensor 23 gemessen und der Person mittels eines mit dem Steuerrechner 17 verbundenen Sichtgerät 25 angezeigt. Daraufhin stoppt die Person mittels des Handhabungsgerätes 22 die Bewegung des Roboters R und speichert die momentan auf den Kolben 18 bzw. Greifer 18 und somit auf den Roboter R wirkende Kraft im Steuerrechner 17 durch Betätigen einer in den Figuren nicht näher dargestellten Eingabetaste des Handhabungsgerätes 22.

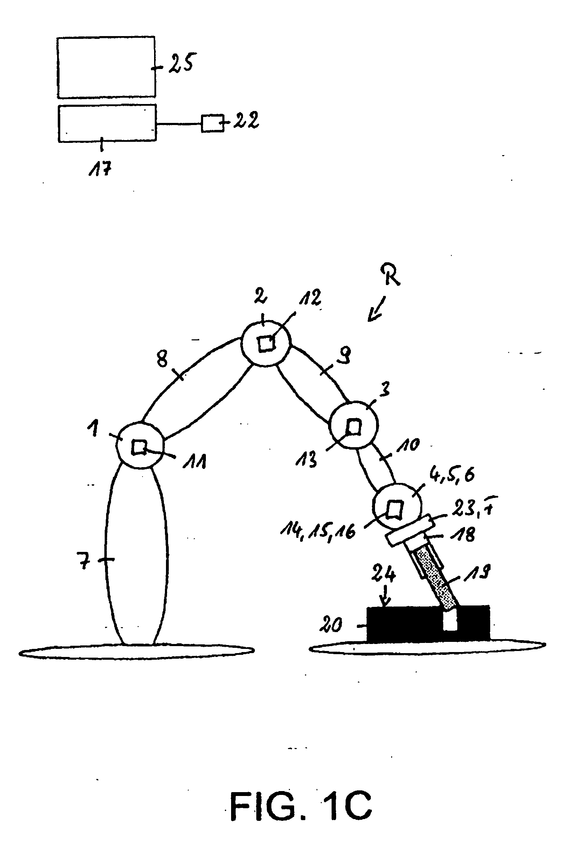

Anschließend steuert die Person mittels des Handhabungsgerätes 22 den Roboter R derart, dass dieser den Kolben 19 mit im Wesentlichen konstanter Kraft in Richtung des Spalts 21 bewegt, wie dies in den Figuren 1B und 1C dargestellt ist. Trifft der Kolben 19 auf den Spalt 21, Fig. 1C, dann ändert sich die auf den Kolben 19 und somit auf den Roboter R wirkende Kraft bzw. Drehmoment, was wiederum mit dem Kraftmesser 23 detektiert wird. Die Person kann diesen Zustand eventuell auch an einem Nachgeben oder einer Orientierungsänderung des Kolbens 19 erkennen.

Die auf den Roboter R wirkende Kraft zum Zeitpunkt des in de Fig. 1C gezeigten Zustands, d.h. bei Erreichen des Spalts 21, wird optional der Person auf dem Sichtgerät 25 gezeigt. Daraufhin betätigt die Person die Eingabetaste des Handhabungsgerätes 22, wodurch die auf den Roboter R wirkende Kräfte bzw. Drehmomente für den in der Fig. 1C gezeigten Zustand im Steuerrechner 17 gespeichert werden.

Nach dem Abspeichern des Kraft bzw. Momentendzustands des in der Fig. 1C dargestellten Zustands steuert die Person den Roboter R mittels des Handhabungsgerätes 22 derart an, dass sich der Kolben 19 aufrichtet, bis er im Wesentlichen senkrecht zur Oberfläche 24 des Metallblocks 24 ausgerichtet ist und in den Spalt 21 gedrückt werden kann. Für diesen Zustand speichert die Person durch Drücken der Eingabetaste des Handhabungsgerätes 22 wieder die auf den Roboter R wirkenden Kräfte.

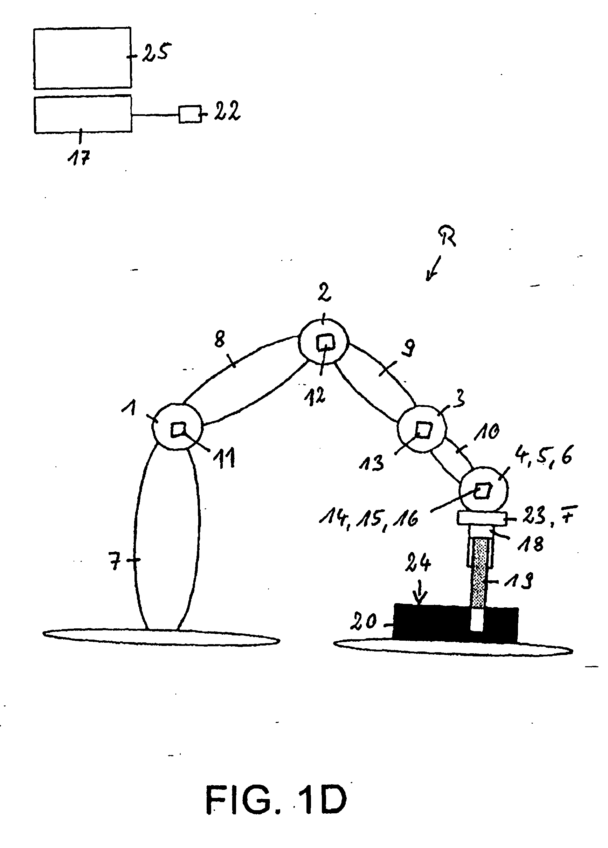

Anschließend steuert die Person mittels des Handhabungsgerätes 22 den Roboter R derart, dass dieser den Kolben 19 entlang eines Kraftkorridors in den Spalt 21 drückt, wie dies in der Fig. 1D gezeigt ist. Der Kraftkorridor ist im Falle des vorliegenden Ausführungsbeispiels dadurch gekennzeichnet, dass auf den Kolben 19 möglichst geringe Kräfte wirken. Dieser Zustand wird wiederum mit dem Steuerrechner 17 durch Drücken der Eingabetaste des Handhabungsgerätes 22 gespeichert.

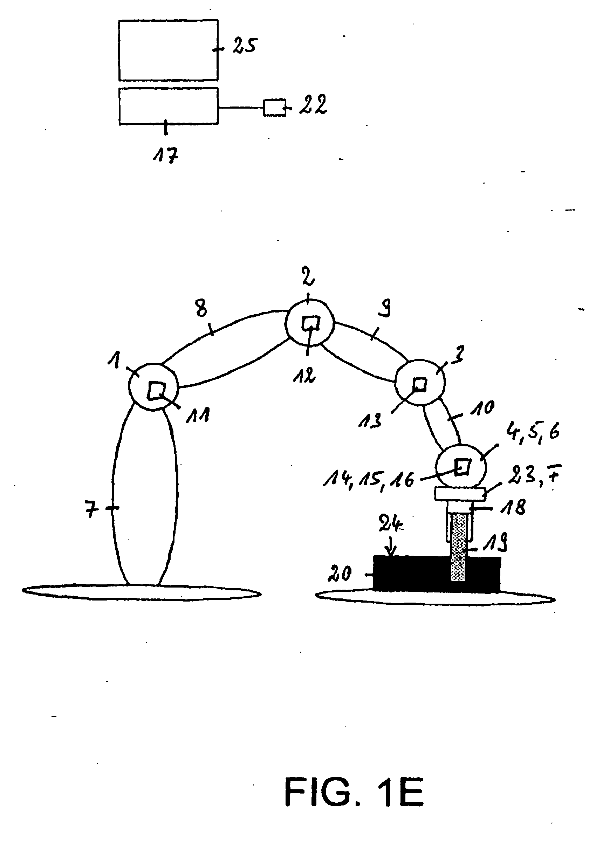

Der Roboter R drückt den Kolben 19 solange in den Spalt 21, bis der Kolben 19 die untere Begrenzung des Spalts 21 erreicht, wie dies in de Fig. 1E veranschaulicht ist. Dadurch ist der Kolben 19 im Metallblock 20 gefügt.

Das Erreichen der unteren Begrenzung des Spalts 21 erkennt die Person aufgrund der zurückgelegten Strecke des Kolbens 19 beim Fügen oder durch einen Anstieg der auf den Roboter R wirkenden Kraft beim Auftreffen. Die für das Fügen im Endzustand notwendige Kraft wird wiederum im Steuerrechner 17 durch Drücken der Eingabetaste des Handhabungsgerätes 22 gespeichert.

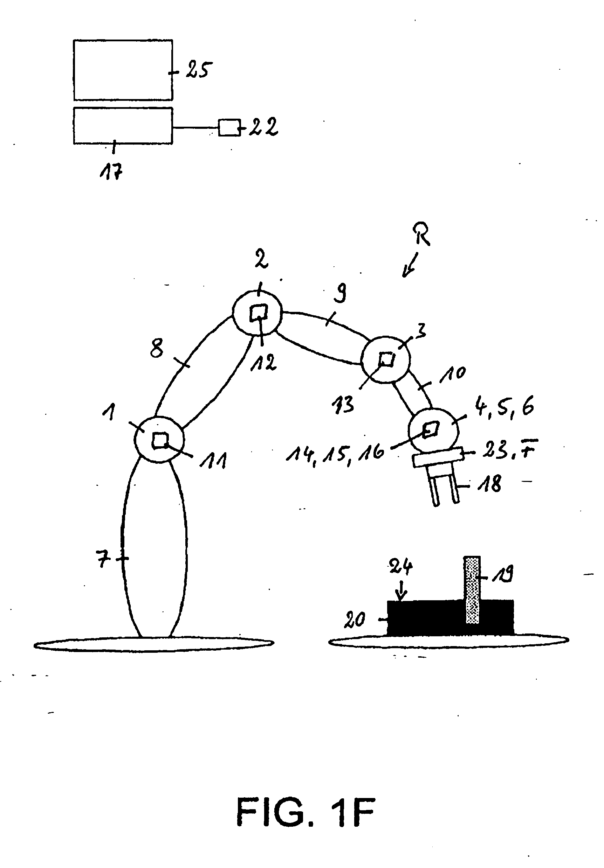

Abschließend wird der Greifer 18 geöffnet und vom Kolben 19 entfernt, Fig. 1F, und die Teach-In Programmierung ist beendet. Bei einem späteren Fügen weiterer Kolben in die Spalte eines Metallblocks steuert das auf dem Steuerrechner 17 laufende Rechenprogramm den Roboter R derart an, dass der Roboter R diese Kolben in ihre Metallblöcke gemäß der während der eben beschriebenen Teach-In Programmierung festgelegten Kraft bzw. Momenten-Charakteristik bewegt.

Im vorab beschriebenen illustrativen Ausführungsbeispiel werden bei der Teach-In Programmierung nur die Kräfte bzw. Momente abgespeichert. Zusätzlich können bei der Teach-In Programmierung auch die entsprechenden Stellungen des Roboters R abgespeichert werden, indem beispielsweise für jeden Zustand die Achsenstellungen der Achsen 1-6 ebenfalls abgespeichert werden. Des Weiteren können Fehlerbereiche bzw. Toleranzbereich bezüglich der Achsenstellungen festgelegt werden, wodurch insbesondere nachgiebige Regelverfahren für die Regelung des Roboters R verwendet werden können.

Im beschriebenen illustrativen Ausführungsbeispiel werden die Kräfte und eventuell die kartesischen bzw. achsenspezifischen Positionen der Achsen 1-6 zu diskreten Zuständen abgespeichert.

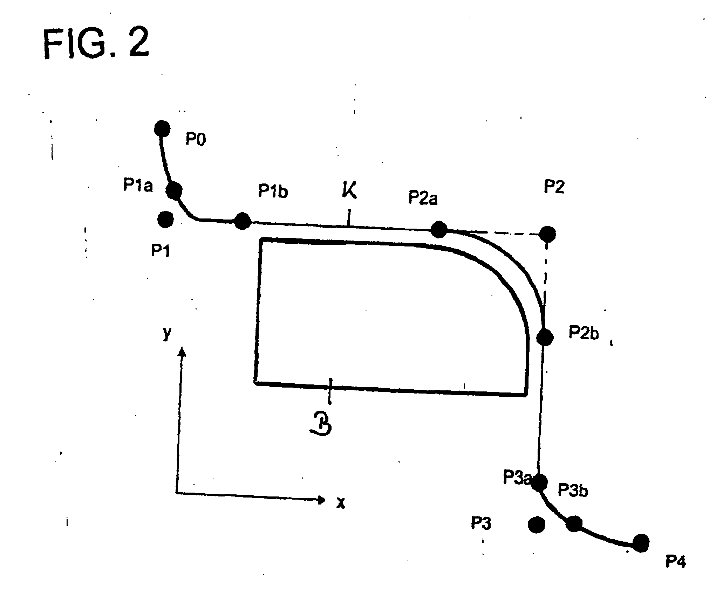

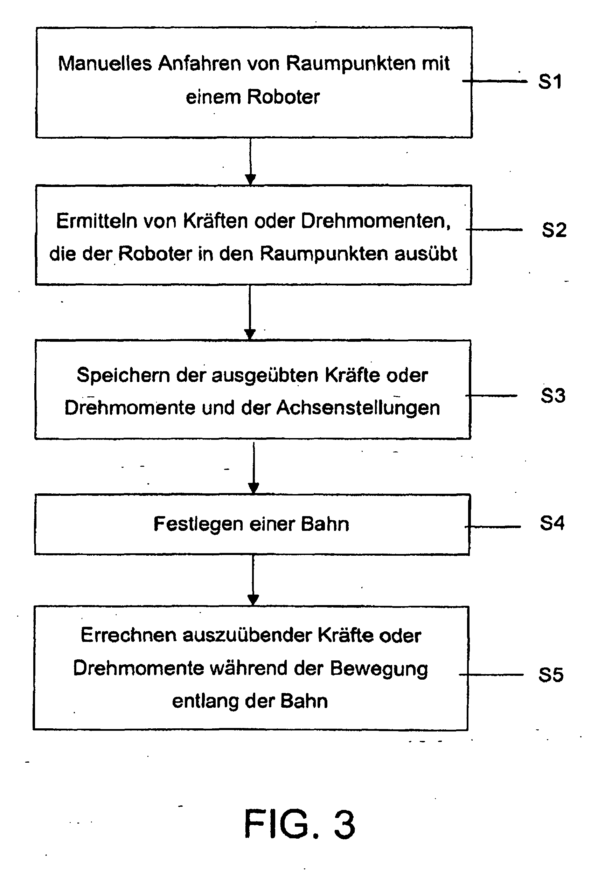

Fig. 2 veranschaulicht ein Überschleifen eines während einer Teach-In Programmierung gespeicherten Kraft-Momentenverlaufs. Die Fig. 3 zeigt ein dazu entsprechendes Flussdiagramm.

Die zu einzelnen Zeitpunkten ermittelten Kräfte bzw. Momente während der Teach-In Programmierung könne durch ein Überschleifen mit beispielsweise Polynomkurven zu einer glatten Kontur verbunden werden.

Bei dem in der Fig. 2 veranschaulichten Ausführungsbeispiels soll ein Roboter, beispielsweise der in der Fig. 1 gezeigte Roboter R, ein Bauteil B mit einem anstelle des Greifers 18 am Roboter R befestigten Werkzeug bearbeiten. Im Falle des vorliegenden Ausführungsbeispiels soll der Roboter R derart angesteuert werden, dass sich das Werkzeug in den kartesischen Richtungen x, y eines raumfesten Systems, z.B. einem Weltkoordinatensystem mit den Koordinaten x und y, auf einer Kurve K, die durch Punkte P0, P1a, P1b, P2a, P2b, P3a, P3b und P4 definiert ist, bewegt. Die Bewegung beginnt am Punkt P0, an dem das Werkzeug auf das Bauteil B keine Kraft ausüben soll. Beim Erreichen des Punktes P1b soll das Werkzeug auf das Bauteil B in x-Richtung keine Kraft und in negativer y-Richtung eine konstante Kraft ausüben. Eine solche Bewegung ist z.B. geeignet beim Entgraten des Bauteils B mit dem Werkzeug.

Während der Bewegung vom Punkt P1b zum Punkt P2a soll das Werkzeug auf das Bauteil B in x-Richtung keine Kraft und in negativer y-Richtung die konstante Kraft ausüben.

Zwischen den Punkten P2a und P2b soll der Roboter R das Werkzeug auf einem Kreissegment bewegen, wobei das Werkzeug auf das Bauteil B die konstante Kraft in radialer Richtung ausüben soll. Die in radialer Richtung wirkende konstante Kraft soll Komponenten in negativer x- und negativer y-Richtung haben.

Zwischen den Punkten P2b und P3a soll das Werkzeug auf das Bauteil B die konstante Kraft in negativer x-Richtung und in y-Richtung keine Kraft ausüben. Wenn das Bauteil den Punkt P4 erreicht, soll auf das Bauteil keine Kraft mehr wirken.

Dieser Kraft-Verlauf wird im Falle des vorliegenden Ausführungsbeispiels, das nur zur illustration angegeben und kein Bestandteil der Erfindung ist, mittels folgender Teach-In Programmierung im Steuerrechner 17 programmiert:

Der Roboter R bzw. das mit dem Roboter R bewegte Werkzeug wird an den Punkt P0 mittels des Handhabungsgerätes 22 herangefahren, Schritt S1 des in der Fig. 3 gezeigten Flussdiagramms. Am Punkt P0 wirkt auf das Werkzeug keine Kraft. Dies wird im Steuerrechner 17 gespeichert, Schritte S2 und S3 des in der Fig. 2 gezeigten Flussdiagramms.

Anschließend wird das Werkzeug mit dem Roboter R und mit Hilfe des Handhabungsgerätes 22 an einen Punkt P1 herangefahren, der horizontal mit den Punkten P1b und P2b verbunden ist, Schritt S1 des in der Fig. 3 gezeigten Flussdiagramms.

Am Punkt P1 drückt der Roboter R das Werkzeug auf eine Fläche derart, dass das Werkzeug die konstante Kraft in negativer y-Richtung und keine Kraft in x-Richtung ausübt. Diese Information wird im Steuerrechner 17 abgespeichert, Schritte S2 und S3 des in der Fig. 3 gezeigten Flussdiagramms.

Anschließend wird der Roboter R mit Hilfe des Handhabungsgerätes 22 derart bewegt, dass das Werkzeug einen Punkt P2 erreicht, Schritt S1 des in der Fig. 3 gezeigten Flussdiagramms. Der Punkt P2 befindet sich auf einer Verbindungslinie zwischen den Punkten P1, P1b und P2a und auf einer Verbindungslinie zwischen den Punkten P2b und P3a. Am Punkt P2 drückt der Roboter R das Werkzeug auf eine Fläche derart, dass das Werkzeug ebenfalls die konstante Kraft in negativer y-Richtung und keine Kraft in x-Richtung ausübt. Diese Information wird im Steuerrechner 17 abgespeichert, Schritte S2 und S3 des in der Fig. 3 gezeigten Flussdiagramms.

Danach wird der Roboter R mit Hilfe des Handhabungsgerätes 22 derart bewegt, dass das Werkzeug am Punkt P2 derart auf eine Fläche drückt, dass das Werkzeug die konstante Kraft in negativer x-Richtung und keine Kraft in y-Richtung ausübt. Diese Information wird im Steuerrechner 17 abgespeichert, Schritte S2 und S3 des in der Fig. 3 gezeigten Flussdiagramms.

Anschließend wird der Roboter R mit Hilfe des Handhabungsgerätes 22 derart bewegt, dass das Werkzeug einen Punkt P3 erreicht, Schritt S1 des in der Fig. 3 gezeigten Flussdiagramms. Der Punkt P3 befindet sich auf der Verbindungslinie zwischen den Punkten P2b und P3a und auf einer horizontal ausgerichteten Verbindungslinie, die die Punkte P3 und P4 verbindet. Am Punkt P3 drückt der Roboter R das Werkzeug auf eine Fläche derart, dass das Werkzeug die konstante Kraft in negativer x-Richtung und keine Kraft in y-Richtung ausübt.

Diese Information wird im Steuerrechner 17 abgespeichert, Schritte S2 und S3 des in der Fig. 3 gezeigten Flussdiagramms.

Danach wird der Roboter R mit Hilfe des Handhabungsgerätes 22 derart bewegt, dass das Werkzeug den Punkt P4 erreicht, Schritt S1 des in der Fig. 3 gezeigten Flussdiagramms. Am Punkt P4 übt das Werkzeug keine Kraft aus. Dies wird im Steuerrechner 17 gespeichert, Schritte S2 und S3 des in der Fig. 2 gezeigten Flussdiagramms.

Um aus den gespeicherten Kräften während der Teach-In Programmierung bei den Punkten P0-P4 den gewünschten KräfteVerlauf entlang der Kurve K zu erhalten, wird im Steuerrechner 17 die durch die Punkte P0, P1a, P1b, P2a, P2b, P3a, P3b und P4 definierte Kurve K festgelegt, P1a, P1b, P2a, P2b, P3a, P3b dabei durch Überschleifen, Schritt S4 des in der Fig. 3 gezeigten Flussdiagramms, und die auf das Bauteil B wirkenden Soll-Kräfte aufgrund der zu den Punkten P0-P4 gespeicherten Kräfte interpoliert bzw. überschliffen, Schritt S5 des in der Fig. 3 gezeigten Flussdiagramms.

Aufgrund dieses Überschleifens errechnet der Steuerrechner 17 bzw. ein auf dem Steuerrechner 17 laufendes Rechnerprogramm, dass das Werkzeug zwischen den Punkten P1b und P2a die konstante Kraft in negativer Y-Richtung und zwischen den Punkten P2b und P3a die konstante Kraft in negativer x-Richtung ausüben soll. Aufgrund des Verlaufs der Kurve K zwischen den Punkten P2a und P2b auf einem Kreissegment errechnet der Steuerrechner 17 das auf das Bauteil wirkende Kraftprofil derart, dass auf das Werkzeug die konstante Kraft radial zum Kreissegment ausübt, die negative Kraftkomponente in x- und y-Richtung aufweist.

Zwischen den Punkten P0, P1a und P1b errechnet das auf dem Steuerrechner 17 laufende Rechnerprogramm, dass sich die auf das Bauteil B wirkende Kraft langsam aufbauen soll, bis die Kraft am Punkt P1b derart aufgebaut ist, dass sie die konstante Kraft in negativer y-Richtung aufweist.

Zwischen den Punkten P3a und P4 errechnet das auf dem Steuerrechner 17 laufende Rechnerprogramm, dass die auf das Bauteil B wirkende Kraft langsam abnimmt, bis sie den Wert Null erreicht, wenn das Bauteil B am Punkt P4 angekommen ist.

Zusätzlich können noch die Achsenstellungen der Achsen 1-6 für die Punkte P0, P1, P2, P3 und P4 im Steuerrechner 17 gespeichert werden.

Im Falle des vorliegenden illustrativen Ausführungsbeispiels berechnet ferner das auf dem Steuerrechner 17 laufende Rechnerprogramm die Achsenstellungen der Achsen 1-6 derart, dass das Werkzeug für die Kraftaufwendung geeigneten Orientierungen und Positionen im Raum aufweist.

Beim Überschleifen von Kräften in den kartesischen Richtungen des Weltkoordinatensystems kann derselbe Überschleifalgorithmus für die in x-, y- und z-Richtung wirkenden Kraftkomponenten verwendet werden, die Kräfte werden aber immer auf die aktuelle Position des Werkzeugkoordinatensystems bezogen.

Beim Überschleifen von Momenten um kartesischen Richtungen z.B. des Weltkoordinatensystems gibt der Überschleifalgorithmus der Steuerung für jeden Zeitpunkt die Orientierung des Werkzeugs vor. Die Momente in x-, y- und z-Richtung werden nach demselben Algorithmus überschliffen, der für die Kraft- oder Orientierungskomponenten verwendet wird. Diese Momentenverläufe werden dann im gewünschten Koordinatensystem aufgebracht.

Beim Überschleifen von achsspezifischen Kräften und Momenten können für ein Überschleifen von achsspezifischen Bewegungen bekannte Algorithmen als Grundlage verwendet werden.

Im Falle des anhand der Figuren 2 und 3 obenstehend beschriebenen Ausführungsbeispiels, das nur zur Illustration angegeben und kein Bestandteil der Erfindung ist, wird der Kraft-Verlauf bestimmt, indem der Roboter R das Werkzeug während der Teach-In Programmierung gegen eine Fläche drückt.

Gemäß einem ebenfalls anhand der Figuren 2 und 3 nachfolgend beschriebenen erfindungsgemäßen Ausführungsbeispiels wird der Kraft-Verlauf mittels folgender Teach-In Programmierung im Steuerrechner 17 programmiert:

Der Roboter R bzw. das mit dem Roboter R bewegte Werkzeug wird an den Punkt P0 mittels des Handhabungsgerätes 22 oder durch manuelles Führen des Roboters R, wie z.B. manuelles Ziehen oder Drücken am Roboter R, herangefahren bzw. herangebracht, ohne eine Fläche oder einen Gegenstand zu berühren, Schritt S1 des in der Fig. 3 gezeigten Flussdiagramms. Am Punkt P0 wirkt auf das Werkzeug keine Kraft. Dies wird im Steuerrechner 17 gespeichert, Schritte S2 und S3 des in der Fig. 3 gezeigten Flussdiagramms.

Anschließend wird das Werkzeug mit dem Roboter R und mit Hilfe des Handhabungsgerätes 22 oder durch manuelles Führen an den Punkt P1 herangefahren bzw. herangebracht, ohne eine Fläche oder einen Gegenstand zu berühren, Schritt S1 des Flussdiagramms. Am Punkt P1 wird die gewünschte Pose des Roboters R festgelegt und anschließend am Roboter R derart manuell gezogen oder gedrückt, dass das Werkzeug bzw. der Roboter R die konstante Kraft in negativer γ-Richtung und keine Kraft in x-Richtung ausübt. Diese Information wird im Steuerrechner 17 abgespeichert, Schritte S2 und S3 des Flussdiagramms.

Anschließend wird der Roboter R mit Hilfe des Handhabungsgerätes 22 oder durch manuelles Führen des Roboters R derart bewegt, dass das Werkzeug den Punkt P2 erreicht, ohne einen Gegenstand oder eine Fläche zu berühren, Schritt S1 des Flussdiagramms. Am Punkt P2 wird die gewünschte Pose des Roboters R eingestellt und manuell am Roboter R gedrückt oder gezogen, dass das Werkzeug bzw. der Roboter R ebenfalls die konstante Kraft in negativer y-Richtung und keine Kraft in x-Richtung ausübt. Diese Information wird im Steuerrechner 17 abgespeichert, Schritte S2 und S3 des Flussdiagramms.

Danach wird am Roboter manuell derart gezogen oder gedrückt, dass der Roboter R am Punkt P2 eine Kraft ausübt, dass das Werkzeug bzw. der Roboter R die konstante Kraft in negativer x-Richtung und keine Kraft in y-Richtung ausübt. Diese Information wird im Steuerrechner 17 abgespeichert, Schritte S2 und S3 des Flussdiagramms.

Anschließend wird der Roboter R mit Hilfe des Handhabungsgerätes 22 bzw. durch manuelles Führen derart bewegt, dass das Werkzeug den Punkt P3 erreicht, ohne einen Gegenstand zu berühren, Schritt S1 des Flussdiagramms. Am Punkt P3 wird manuell derart am Roboter R gezogen oder gedrückt, dass das Werkzeug bzw. der Roboter R die konstante Kraft in negativer x-Richtung und keine Kraft in y-Richtung ausübt. Diese Information wird im Steuerrechner 17 abgespeichert, Schritte S2 und S3 des Flussdiagramms.

Danach wird der Roboter R mit Hilfe des Handhabungsgerätes 22 bzw. durch manuelles Führen derart bewegt, dass das Werkzeug den Punkt P4 erreicht, Schritt S1 des Flussdiagramms.

Am Punkt P4 übt das Werkzeug keine Kraft aus. Dies wird im Steuerrechner 17 gespeichert, Schritte S2 und S3 des Flussdiagramms.

Um aus den gespeicherten Kräften während der Teach-In Programmierung bei den Punkten P0-P4 den gewünschten KräfteVerlauf entlang der Kurve K zu erhalten, wird im Steuerrechner 17 die durch die Punkte P0, P1a, P1b, P2a, P2b, P3a, P3b und P4 definierte Kurve K festgelegt, P1a, P1b, P2a, P2b, P3a, P3b dabei durch Überschleifen, Schritt S4 des Flussdiagramms, und die auf das Bauteil B wirkenden Soll-Kräfte aufgrund der zu den Punkten P0-P4 gespeicherten Kräfte interpoliert bzw. überschliffen, Schritt S5 des Flussdiagramms.

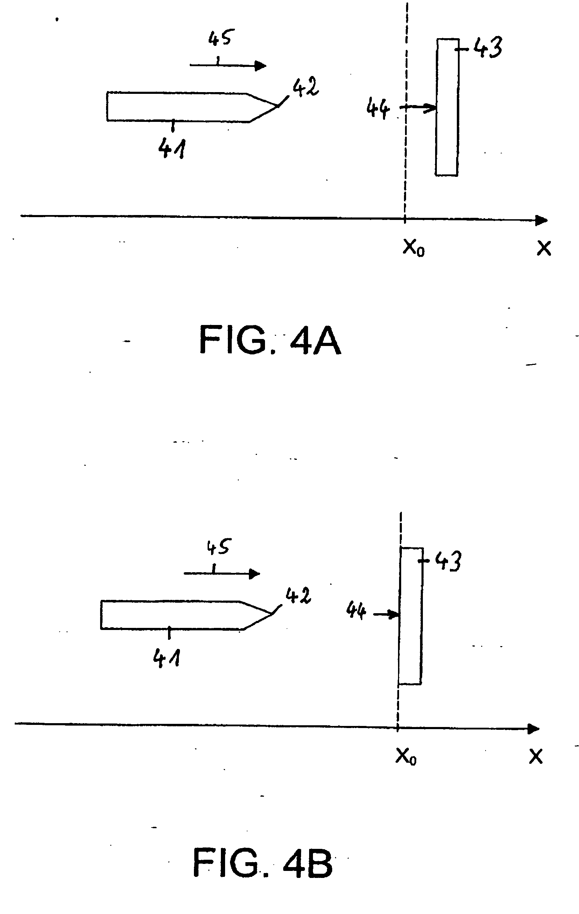

Im Programmbetrieb, d.h. nach dem Abschluss der Programmierung des Roboters R kann dieser insbesondere mit sogenannten nachgiebigen Regelungsverfahren, wie z.B. Momentenbetrieb, Steifigkeitsregelung, Impedanzregelung oder Admittanzregelung, betrieben werden. Diesen Regelungsverfahren ist gemeinsam, dass im Gegensatz zu reinen Lageregelungen neben einer Positionsvorgabe Grenzen für Kräfte und Momente vorgegeben werden können, die zum Erreichen einer Positionsvorgabe nicht überschritten werden dürfen. Die Figuren 4A-4C veranschaulichen einen solchen Betriebsmodus.

Die Figuren 4A-4C zeigen jeweils ein am Flansch F des Roboters R befestigtes Werkzeug 41 mit einer Spitze 42 und ein Bauteil 43 mit einer dem Werkzeug 41 zugewandten Oberfläche 44.

Im Falle der vorliegenden Erfindung wurde während der Programmierung des Steuerrechners 17 der Roboter R derart manuell eingestellt, dass die Spitze 42 des Werkzeugs 41 einen vorbestimmten Raumpunkt mit einer bestimmten Kraft angefahren hat. Der Raumpunkt wird in kartesischen Kordnieten beschrieben und hat die Koordinaten x₀, y₀ und z₀. Im Steuerrechner 17 wurden die vom Roboter R aufgebrachte Kraft und die Ortkoordinaten des angefahrenen Raumpunktes gespeichert, wobei jedoch für die x-Koordinate ein Toleranzband um die Soll-Koordinate x₀ gelegt wurde.

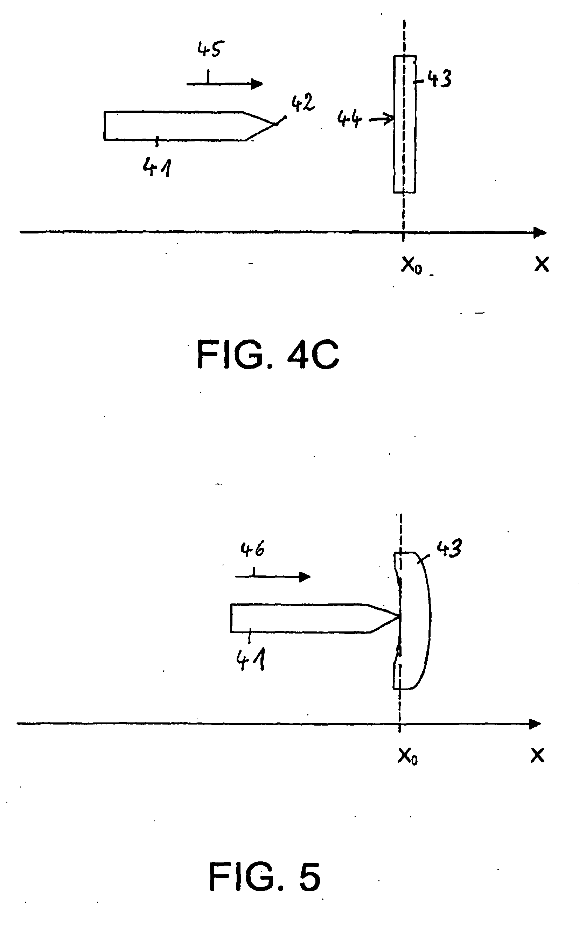

Im Programmbetrieb, d.h. nach Beendigung der Programmierung des Roboters R, soll der Roboter R nacheinander mehrere Bauteile 43 mit dem Werkzeug 41 bearbeiten. Zu diesem Zweck sollen die Bauteile 43 jeweils derart positioniert werden, dass sie gemäß dem vorab festgelegten Raumpunkt ausgerichtet sind. Aufgrund von Toleranzen, bedingt z.B. durch unterschiedlichen Dicken der Bauteile 43 oder einer relativ ungenauen Positionierung, kann es sein, dass die Bauteile 43 nicht genau bezüglich ihrer x- Koordinate positioniert sind. So zeigen die Fig. 4A und 4B das Bauteil 43 leicht nach rechts versetzt bezüglich ihrer Sollposition und der Zeichenebene. Die Fig. 4C zeigt das Bauteil 43 exakt positioniert.

Wäre der Roboter R ein konventioneller Roboter, d.h. wären lediglich die Raumkoordinaten der anzufahrenden Sollposition in der Steuervorrichtung 17 programmiert, dann würde die Spitze 42 des Werkzeugs 41 das in der Fig. 4A gezeigte Bauteil 43 überhaupt nicht erreichen und die Oberfläche 44 des in der Fig. 4B gezeigten Bauteils 43 zwar erreichen, jedoch nicht die notwendige Kraft auf das Bauteil 43 ausüben. Nur das exakt positionierte und in der Fig. 4C gezeigte Bauteil 43 wird von der Spitze 42 des Werkzeugs 41 derart erreicht, dass das Werkzeug die erforderliche Kraft auf das Bauteil 43 ausübt. Dieser konventionelle Betriebsmodus entspricht einer konventionellen Lageregelung.

Im Falle des vorliegenden Ausführungsbeispiels ist jedoch die mit der Spitze 42 des Werkzeugs 41 anzufahrende Position in x-Richtung mit dem Toleranzband um die x₀ Koordinate im Steuerrechner 17 abgelegt. Der Roboter R bewegt demnach im Falle des vorliegenden Ausführungsbeispiels das Werkzeug 41 in Richtung eines Pfeils 45 bis der Roboter R die während der Programmierung gespeicherte Kraft in x-Richtung aufbringt, da dann die Spitze 42 des Werkzeugs 41 die Oberfläche 44 mit der abgespeicherten Kraft erreicht hat. Demnach erreicht die Spitze 42 die Oberfläche 44 des Bauteils 43 und übt auf dieses die abgespeicherte Kraft aus, auch wenn das Bauteil 42 ungenau positioniert ist.

Erreicht die Spitze 42 des Werkzeugs 41 das Bauteil 43, dann übt das Werkzeug 41 die vorgegebene Kraft auf das Bauteil 43 aus, das sich, wie in der Fig. 5 dargestellt, leicht verformen kann.

Im Falle des vorliegenden Ausführungsbeispiels wird kein Verlauf der Sollkraft geplant, sondern der Roboter bewegt sich unter Berücksichtigung programmierter Grenzen solange, bis die gewünschte Kraft erreicht ist. Die Bewegung kann bevorzugt in Momentenbetrieb, Steifigkeitsregelung, Impedanzregelung oder Admittanzregelung erfolgen, alternativ in Lageregelung, bis der Kontakt mit dem Bauteil erkannt wird, und ab dann z.B. in Kraftregelung.

Bei den beschriebenen Ausführungsbeispielen werden die Kräfte oder Momente mit dem Kraftsensor 23 gemessen. Die auf den Roboter R wirkende bzw. ausgeübte Kräfte oder Momente können auch mit anderen Mitteln ermittelt werden. Eine Möglichkeit ist eine Herleitung über die elektrischen Ströme der Motoren 11-16.

Der Roboter R kann auch an die Raumpunkte P0-P4 manuell z.B. durch Drücken und Ziehen an den Achsen 1-6 geführt werden.

## Patentansprüche

1. Verfahren zum Programmieren eines Roboters, bei dem mit dem Roboter (R) wenigstens ein Raumpunkt (P0-P4) durch manuelles Führen manuell angefahren wird, **gekennzeichnet durch** folgende Verfahrensschritte:
- Einstellen von Kräften oder Drehmomenten, die der Roboter (R) im angefahrenen Raumpunkt (P0-P4) ausübt, ohne Kontakt zu einem Gegenstand bei gleichzeitiger Positions- und/oder Posenregelung des Roboters (R), und
- Speichern der ausgeübten Kräfte oder Drehmomente.

2. Verfahren nach Anspruch 1, aufweisend
- Ermitteln der Kräfte oder Drehmomente mittels wenigstens eines Kraft- oder Drehmoment-Sensors (23) des Roboters (R) und/oder über elektrische Ströme von für eine Bewegung des Roboters (R) vorgesehenen elektrischen Motoren (11-16), und/oder
- Ermittlung von Soll-Kräften und/oder Soll-Drehmomenten beim manuellen Bewegen des Roboters (R) ohne Kontakt zu einem Gegenstand durch die gleichzeitige Vollführung von Testbewegungen des Roboters (R), die durch die vom Bediener während der Bewegung aufgebrachten Kräfte/Momente zu einem Einstellen von Soll-Kräften oder Soll-Drehmomenten führen.

3. Verfahren nach Anspruch 1 oder 2, bei dem
- die gespeicherte Kraft oder das gespeicherte Drehmoment eine vom Roboter (R) auszuübende obere Grenzkraft oder ein vom Roboter (R) auszuübendes oberes Grenzmoment ist,
- der Roboter (R) eine Mehrzahl von Achsen (1-6) aufweist und für den wenigstens einen Raumpunkt (P0-P4) die aufgebrachten Kräfte oder Drehmomente aller Achsen (1-6) gespeichert werden, und/oder
- der Roboter (R) eine Mehrzahl von Achsen (1-6) aufweist und für den wenigstens einen Raumpunkt (P0-P4) zusätzlich wenigstens eine der Stellungen der Achsen (1-6) oder wenigstens eine Komponente der TCP-Position gespeichert wird.

4. Verfahren nach Anspruch 3, bei dem die Stellungen aller Achsen (1-6) für den wenigstens einen Raumpunkt (P0-P4) gespeichert wird.

5. Verfahren nach einem der Ansprüche 1 bis 4, wobei
- der Roboter (R) bezüglich einer Mehrzahl von Freiheitsgraden bewegbar ist und für den wenigstens einen Raumpunkt (P0-P4) für einen ersten Teil der Freiheitsgrade des Roboters (R) die ausgeübte Kraft oder das ausgeübte Drehmoment und für einen vom ersten Teil der Freiheitsgrade verschiedenen zweiten Teil der Freiheitsgrade die Ortskoordinaten des entsprechenden Raumpunktes (P0-P1) gespeichert werden, und/oder
- der Roboter (R) bezüglich einer Mehrzahl von Freiheitsgraden bewegbar ist und für den wenigstens einen Raumpunkt (P0-P4) für einen Teil der Freiheitsgrade des Roboters (R) die ausgeübte Kraft oder das ausgeübte Drehmoment und die Ortskoordinaten des entsprechenden Raumpunktes (P0-P1) gespeichert werden.

6. Verfahren nach einem der Ansprüche 1 bis 5, bei dem eine Mehrzahl von Raumpunkten (P0-P4) manuell angefahren und die in den angefahrenen Raumpunkten (P0-P4) vom Roboter (R) ausgeübten Kräfte gespeichert werden.

7. Verfahren nach Anspruch 6, zusätzlich aufweisend:
- Festlegen einer Bahn (K), auf der sich der Roboter (R) nach seiner Programmierung bewegen soll, und
- Errechnen der vom Roboter (R) auszuübenden Kraft oder des vom Roboter (R) auszuübenden Drehmoments während der Bewegung entlang der Bahn (K) aufgrund der für die Raumpunkte (P0-P4) ermittelten Kräfte oder Drehmomente.

8. Verfahren nach Anspruch 7, zusätzlich aufweisend:
- Festlegen einer Bahn (K), auf der sich der Roboter (R) nach seiner Programmierung bewegen soll, und
- Festlegung der vom Roboter (R) auszuübenden Kraft oder des vom Roboter (R) auszuübenden Drehmoments im Zielpunkt der Bahn (K) aufgrund der für die Raumpunkte geteachten Kräfte oder Drehmomente.

9. Roboter zum Ausführen des Verfahrenes nach einem der Ansprüche 1 bis 8, aufweisend
- eine Mehrzahl von Antrieben (11-16),
- eine Mehrzahl von von den Antrieben (11-16) bewegbaren Achsen (1-6),
- eine Vorrichtung (23) zum Ermitteln einer vom Roboter (R) ausgeübten Kraft oder eines vom Roboter (R) ausgeübten Drehmoments und
- eine zum Steuern der Antriebe (11-16) vorgesehene Steuervorrichtung (17), die aufgrund eines manuellen Anfahren von wenigstens einem Raumpunkt (P0-P4) mit dem Roboter (R) mittels der Vorrichtung (23) zum Ermitteln der vom Roboter (R) ausgeübten Kraft oder des vom Roboter (R) ausgeübten Drehmoments beim Erreichen des Raumpunktes (P0-P4) ermittelte Kräfte oder Drehmomente speichert und eingerichtet ist, das Verfahren nach einem der Ansprüche 1 bis 9 auszuführen.

10. Roboter nach Anspruch 9,
- dessen Vorrichtung zum Ermitteln der vom Roboter (R) ausgeübten Kraft oder des vom Roboter (R) ausgeübten Drehmoments wenigstens ein Kraft- oder DrehmomentSensor (23) ist,
- dessen Antriebe elektrische Motoren (11-16) aufweisen und dessen Vorrichtung zum Ermitteln der vom Roboter (R) ausgeübten Kraft oder des vom Roboter (R) ausgeübten Drehmoments eingerichtet ist, die Kraft oder das Drehmoment mittels gemessener elektrischer Ströme der elektrischen Motoren (11-16) zu ermitteln,
- bei dem die gespeicherte Kraft oder das gespeicherte Drehmoment eine vom Roboter (R) auszuübende obere Grenzkraft oder ein vom Roboter (R) auszuübendes oberes Grenzmoment ist, und/oder
- der bezüglich einer Mehrzahl von Freiheitsgraden bewegbar ist und dessen Steuervorrichtung (17) derart eingerichtet ist, für den wenigstens einen Raumpunkt (P0-P4) für einen ersten Teil der Freiheitsgrade des Roboter (R) die ausgeübte Kraft oder das ausgeübte Drehmoment und für einen vom ersten Teil der Freiheitsgrade verschiedenen zweiten Teil der Freiheitsgrade die Ortkoordinaten des wenigstens einen Raumpunktes (P0-P1) zu speichern.

11. Roboter nach Anspruch 9 oder 10, dessen Steuervorrichtung (17) derart eingerichtet ist, dass sie für den wenigstens einen Raumpunkt (P0-P4) zusätzlich wenigstens eine der dem wenigstens einen Raumpunkt (P0-P4) zugeordneten Stellungen der Achsen (1-6) speichert, und/oder dessen Steuervorrichtung (17) eingerichtet ist, aufgrund einer festgelegten Bahn (K), auf der sich der Roboter (R) nach dem Anfahren der Raumpunkte (P0-P4) bewegen soll, vom Roboter (R) auszuübende Kräfte oder Drehmomente während der Bewegung entlang der Bahn (K) aufgrund der für die Raumpunkte (P0-P4) ermittelten Kräfte oder Drehmomente zu errechnen.

12. Roboter nach Anspruch 11, dessen Steuervorrichtung (17) die Stellungen aller Achsen speichert.

## Claims

1. Method for programming a robot, wherein with the robot (R) at least one point in space (P0-P4) is approached by manual guiding, **characterised by** the following steps:
- adjusting forces or torques that the robot (R) exerts in the approached point in space (P0-P4), without contacting an object with the simultaneous position and/or placement control of the robot (R), and
- saving the exerted forces or torques.

2. Method according to claim 1, comprising
- determining the forces or torques by means of at least one force or torque sensor (23) of the robot (R) and/or by means of electric currents of electric motors (11-16) provided for a movement of the robot (R) and/or
- determining target forces and/or target torques during the manual movement of the robot (R) without contacting an object with the simultaneous execution of test movements of the robot (R), which by means of the forces/torques applied by the user during the movement lead to an adjustment of target forces or target torques.

3. Method according to claim 1 or 2, wherein
- the saved force or the saved torque is an upper limit force to be exerted by the robot (R) or an upper limit torque to be exerted by the robot (R),
- the robot (R) comprises a plurality of axes (1-6) and for the at least one point in space (P0-P4) the applied forces or torques of all axes (1-6) are saved and/or,
- the robot (R) comprises a plurality of axes (1-6) and for the at least one point in space (P0-P4) in addition at least one of the positions of the axes (1-6) or at least one component of the TCP position is saved.

4. Method according to claim 3, wherein the positions of all axes (1-6) for the at least one point in space (P0-P4) are saved.

5. Method according to any one of claims 1 to 4, wherein
- the robot (R) can be moved in relation to a plurality of degrees of freedom and for the at least one point in space (P0-P4) for a first part of the degrees of freedom of the robot (R) the exerted force is saved or the exerted torque and for a second part of the degrees of freedom different from the first part of the degrees of freedom the position coordinates of the corresponding point in space (P0-P1) are saved and/or
- the robot (R) can be moved relative to a plurality of degrees of freedom and for the at least one point in space (P0-P4) for a part of the degrees of freedom of the robot (R) the exerted force or the exerted torque and the position coordinates of the corresponding point in space (P0-P1) are saved.

6. Method according to any one of claims 1 to 5, wherein a plurality of points in space (P0-P4) are approached manually and the forces exerted by the robot (R) in the approached points in space (P0-P4) are saved.

7. Method according to claim 6, further comprising:
- determining a path (K) along which the robot (R) is to move after its programming and
- calculating the force to be exerted by the robot (R) or the torque to be exerted by the robot (R) during the movement along the path (K) on the basis of the forces or torques determined for the points in space (P0-P4).

8. Method according to claim 7, further comprising:
- determining a path (K) along which the robot (R) is to move after programming and
- determining the force to be exerted by the robot (R) or the torque to be exerted by the robot (R) in the target point of the path (K) on the basis of the forces or torques taught for the points in space.

9. Robot for executing the method according to any one of claims 1 to 8, comprising
- a plurality of drives (11-16),
- a plurality of axes (1-6) moveable by the drives (11-16),
- a device (23) for determining a force exerted by the robot (R) or a torque exerted by the robot (R) and
- a control device (17) provided for controlling the drives (11-16), which on the basis of a manual approach of at least one point in space (P0-P4) with the robot (R) by means of the device (23) for determining the force exerted by the robot (R) or the torque exerted by the robot (R) saves the forces or torques determined when reaching the point in space (P0-P4) and is set up to execute the method according to any one of claims 1 to 9.

10. Robot according to claim 9,
- the device of which for determining the force exerted by the robot (R) or the torque exerted by the robot (R) is at least one force or torque sensor (23),
- the drives of which comprise electric motors (11-16) and the device of which is set up to determine the force exerted by the robot (R) or the torque exerted by the robot (R), to determine the force or the torque by means of measured electrical currents of the electric motors (11-16),
- wherein the saved force or the saved torque is an upper limit force to be exerted by the robot (R) or an upper limit torque to be exerted by the robot (R), and/or
- which can be moved relative to a plurality of degrees of freedom, and the control device (17) of which is set up, for the at least one point in space (P0-P4) for a first part of the degrees of freedom of the robot (R) to save the exerted force or the exerted torque, and for a second part of the degrees of freedom different from the first part of the degrees of freedom to save the position coordinates of the at least one point in space (P0-P1).

11. Robot according to claim 9 or 10, the control device (17) of which is set up such that it saves for the at least one point in space (P0-P4) in addition at least one of the positions of the axes (1-6) assigned to at least one point in space (P0-P4), and/or the control device (17) of which is set up, on the basis of a determined path (K) along on which the robot (R) is to move after the approach to the points in space (P0-P4), to calculate forces or torques to be exerted by the robot (R) during the movement along the path (K) on the basis of the forces or torques determined for the points in space (P0-P4).

12. Robot according to claim 11, the control device (17) of which saves the positions of all axes.

## Revendications

1. Procédé de programmation d'un robot, dans lequel au moins un point dans l'espace (P0-P4) est approché manuellement avec le robot par guidage manuel, **caractérisé par** les étapes de procédé suivantes :
- réglage de forces ou de couples de rotation qu'exerce le robot (R) au point dans l'espace (P0-P4) approché, sans contact avec un objet tout en réglant simultanément la position et/ou la pose du robot (R), et
- mémorisation des forces ou couples de rotation exercé(e)s.

2. Procédé selon la revendication 1, présentant :
- la détermination des forces ou des couples de rotation au moyen d'au moins un capteur de force ou de couple de rotation (23) du robot (R) et/ou par l'intermédiaire de courants électriques de moteurs électriques (11-16) prévus pour un mouvement du robot (R), et/ou
- la détermination de forces de consigne et/ou de couples de rotation de consigne lors du mouvement manuel du robot (R) sans contact avec un objet par l'exécution de mouvements de test du robot (R) qui, par les forces/couples appliqué(e)s par l'opérateur pendant le mouvement entraînent un réglage de forces de consigne ou de couples de rotation de consigne.

3. Procédé selon la revendication 1 ou 2, dans lequel
- la force mémorisée ou le couple de rotation mémorisé est une force limite supérieure à exercer par le robot (R) ou un couple limite supérieur à exercer par le robot (R),
- le robot (R) présente une multitude d'axes (1-6), et pour ledit au moins un point dans l'espace (P0-P4), les forces ou couples de rotation appliqué(e)s de tous les axes (1-6) sont mémorisé(e)s, et/ou
- le robot (R) présente une multitude d'axes (1-6), et pour ledit au moins un point dans l'espace (P0-P4), au moins une des positions des axes (1-6) ou au moins un composant de la position TCP est additionnellement mémorisé(e).

4. Procédé selon la revendication 3, dans lequel les positions de tous les axes (1-6) sont mémorisées pour ledit au moins un point dans l'espace (P0-P4).

5. Procédé selon l'une des revendications 1 à 4, dans lequel
- le robot (R) est déplaçable par rapport à une multitude de degrés de liberté, et pour ledit au moins un point dans l'espace (P0-P4) pour une première partie des degrés de liberté du robot (R), la force exercée ou le couple de rotation exercé est mémorisé(e), et pour une deuxième partie des degrés de liberté, qui se distingue de la première partie des degrés de liberté, les coordonnées de lieu du point dans l'espace (P0-P1) correspondant sont mémorisées, et/ou
- le robot (R) est déplaçable par rapport à une multitude de degrés de liberté, et pour ledit au moins un point dans l'espace (P0-P4) pour une partie des degrés de liberté du robot (R) la force exercée ou le couple de rotation exercé ou les coordonnées de lieu du point dans l'espace (P0-P1) correspondant sont mémorisé(e)s.

6. Procédé selon l'une des revendications 1 à 5, dans lequel une multitude de points dans l'espace (P0-P4) sont approchés manuellement, et les forces exercées par le robot (R) dans les points dans l'espace approchés (P0-P4) sont mémorisés.

7. Procédé selon la revendication 6, présentant additionnellement
- la fixation d'une trajectoire (K) sur laquelle le robot (R) doit se déplacer après sa programmation, et
- le calcul de la force à exercer par le robot (R) ou du couple de rotation à exercer par le robot (R) pendant le déplacement le long de la trajectoire (K) sur la base des forces ou des couples de rotation déterminé(e)s pour les points dans l'espace (P0-P4).

8. Procédé selon la revendication 7, présentant additionnellement :
- la fixation d'une trajectoire (K) sur laquelle le robot (R) doit se déplacer après sa programmation, et
- la fixation de la force à exercer par le robot (R) ou du couple de rotation à exercer par le robot (R) au point de destination de la trajectoire (K) sur la base des forces ou couples de rotation enseigné(e)s pour les points dans l'espace.

9. Robot destiné à mettre en oeuvre le procédé selon l'une des revendications 1 à 8, présentant
- une multitude d'entraînements (11-16),
- une multitude d'axes (1-6) déplaçables par les entraînements (11-16),
- un dispositif (23) pour déterminer une force exercée par le robot (R) ou un couple de rotation exercé par le robot (R). et
- un dispositif de commande (17) prévu pour la commande des entraînements (11-16) qui, sur la base d'une approche manuelle d'au moins un point dans l'espace (P0-P4) avec le robot (R) au moyen du dispositif (23) pour déterminer la force à exercer par le robot (R) ou le couple de rotation à exercer par le robot (R) lorsque le point dans l'espace (P0-P4) est atteint, mémorise les forces ou les couples de rotation déterminé(e)s et qui est aménagé pour mettre en oeuvre le procédé selon l'une des revendications 1 à 9.

10. Robot selon la revendication 9,
- dont le dispositif pour déterminer la force exercée par le robot (R) ou le couple de rotation exercé par le robot (R) est au moins un capteur de force ou de couple de rotation (23),
- dont les entraînements présentent des moteurs électriques (11-16) et dont le dispositif pour déterminer la force exercée par le robot (R) ou le couple de rotation exercé par le robot (R) est aménagé pour déterminer la force ou le couple de rotation au moyen de courants électriques mesurés des moteurs électriques (11-16),
- dans lequel la force mémorisée ou le couple de rotation mémorisé est une force limite supérieure à exercer par le robot (R) ou un couple limite supérieur à exercer par le robot (R),
- qui est déplaçable par rapport à une multitude de degrés de liberté, et dont le dispositif de commande (17) est aménagé de telle sorte que pour ledit au moins un point dans l'espace (P0-P4) et pour une première partie des degrés de liberté du robot (R), la force exercée ou le couple de rotation exercé est mémorisé(e), et pour une deuxième partie des degrés de liberté, qui se distingue de la première partie des degrés de liberté, les coordonnées de lieu dudit au moins un point dans l'espace (P0-P1) sont mémorisées.

11. Robot selon la revendication 9 ou 10, dont le dispositif de commande (17) est aménagé de telle sorte qu'il mémorise pour ledit au moins point dans l'espace (P0-P4) additionnellement au moins une des positions des axes (1-6) qui est associée audit au moins un point dans l'espace (P0-P4), et/ou dont le dispositif de commande (17) est aménagé pour calculer, sur la base d'une trajectoire (K) fixée, sur laquelle le robot (R) doit se déplacer après avoir approché les points dans l'espace (P0-P4), des forces ou couples de rotation à exercer par le robot (R) pendant le déplacement le long de la trajectoire (K), sur la base des forces ou couples de rotation déterminé(e)s pour les points dans l'espace (P0-P4).

12. Robot selon la revendication 11, dont le dispositif de commande (17) mémorise les positions de tous les axes.
